# EUROPEAN PATENT APPLICATION

(11) **EP 2 862 818 A1**
(43) Date of publication of application: **22.04.2015**
(21) Application number: 13189234.1
(22) Date of filing: 18.10.2013
(51) Int. Cl.: B65G 1/137

(54) **Method of order fulfilling by making storage units available from a storage facility in a desired sequence at a pack station**

(71) Applicant: Dematic Accounting Services GmbH, 63073 Offenbach (DE)
(72) Inventor: Yamashita, Shin, 63179 Obertshausen (DE)
(74) Representative: Moser Götze & Partner Patentanwälte mbB

(57) **Abstract**

Method of fulfilling orders comprising:
- manually picking items batch-wise by combining several items from several different orders into a common container (21) from inventory according to orders for the items;
- forwarding the common container (21) to an unloading station (22), wherein the items are placed into receptacles by placing multiple items into batch receptacles (M);
- routing at least some of the batch receptacles (M) to a pack stations and storage facility (6) and storing the batch receptacles (M);
- when all of the individual items stored in the automated storage facility (6) are available to complete an order, retrieving and transporting the stored batch receptacles (M) to pack stations (7) for specific item retrieval;
- packing retrieved items with other retrieved items of an order at a pack station (7); and routing the batch receptacles (M) to further pack stations (7).

## Description

The invention relates to a method of order fulfilling in accordance with claim 1.

When operating storage facilities for order fulfillment several aspects must be taken into account as described below.

While picking or compiling orders from transporting units, such as e.g. articles or containers, it is necessary to provide the transporting or storage units, which are associated with a common order, in a directed or sorted fashion. In addition, it is conventional to intermediately store (buffer) the transporting units of an order, until all of the transporting units required for the order are present. They are then passed together onto a collecting line which leads them e.g. to the palletization area, pack station, goods issue, shipment etc.

In the pack station the goods for fulfilling an order are taken from the storage units and placed according to the order into an order container etc. The storage container (often called donor) is then routed back into the racking storage and stored until needed for the next order.

Order fulfillment of orders placed over the Internet must take place within a relatively short period of time in order to be commercially competitive. Such order fulfillment is known as E-commerce and places demands on an order fulfillment system to meet such obligations. This is compounded by the fact that E-commerce usually involves a large number of small orders (each containing as few as one item in the order) that are selected from a large number of potential items. Each unique item has a specific inventory identification, known in the industry as a stock-keeping unit (SKU). Each item usually bears an optical code, such as a barcode or radio frequency identification (RFID) tag that identifies the SKU of the item.

Because of the large number of SKU's from which an order may be selected, the inventory warehouse may be very large in footprint. As such, it is common to designate geographic portions of the inventory warehouse to each be picked by an individual picker such that each picker picks only a portion of each order, since each order may be spread out over the entire general footprint of the inventory warehouse. Each picker is directed by a warehouse management system to pick portions of a number of orders using a various picking technology known in the art. It is efficient to have the picker mix several orders in one picking or picked receptacle rather than having multiple receptacles, each bearing one order portion., in this way, each order may be contained in a number of picked receptacles if the order contains more than an individual item. However, it is then necessary to subsequently sort the contents of the picked receptacle(s) to the order and to process the items so that they can be packed-out for shipment via courier. Also, orders may be made up of items having various physical characteristics such that some items are not able to be readily handled by a conventional material-handling system. Such items are known as non-conveyable.

EP 2 170 742 B2 discloses a method in which at a singulation station of a materials handling facility, individual units of items from collections of items are selected, wherein the collection of items includes units of heterogeneous items picked from inventory storage of the materials handling facility to fulfill a plurality of orders; associating an item identifier of a particular item of the individual units of items with a receptacle identifier of a particular conveyance receptacle of a plurality of conveyance receptacles; associating the particular conveyance receptacle with a particular order that specifies at least one unit of the particular item. In Other words articles from a mixed or dirty batch picking process are singulated by putting a single separate article into/onto a conveyance receptacle and marrying these by correlating their identifiers in a database. From then on only the receptacle identifier is tracked throughout the facility.

Further it is difficult to manage fluctuations in demand within storage facilities. Manually run storage facilities with manual pack stations usually capable of managing the fluctuation and have low initial costs and can be very effective for very slow moving articles in general and fast moving particularly across limited articles and low cost labor situations. However they must be larger in space to handle the same amount of orders as automated high bay systems. In addition, it is difficult to control the progress of manual operations in the timely fashion and running cost and even availability of labor may become an issue in high cost labor situations.

In contrast thereto, the object of the invention is to provide a method of order fulfilling, which allows effective and space saving order fulfillment.

This object is achieved by the method stated in claim 1.

In accordance with the invention, it has been recognized that an effective and space saving order fulfillment may be performed, if items from the manually picking items batch-wise are not singulated as in EP 2 170 742 B2 but items are placed into receptacles by placing multiple items into batch receptacles. This improves throughput of the whole system as fewer containers have to be handled for the same amount of orders and also improves storage space utilization as less receptacles need be buffered.

According to the invention, items are manually picked batch-wise by combining several items from several different orders or by chance the same order into a common container from inventory according to orders for the items. This so-called dirty batch pick is performed in a storage area with manually serviced racks separated by aisles. The dirty batch pick in the common container containing items for different orders is then forwarded to an unloading station, where the items from the common container are placed into receptacles by placing multiple items into batch receptacles.

Therefore, at least two items are placed in a common receptacle, so-called batch receptacle. Usually eight or less items will be placed in the batch receptacles depending upon type of item (color, size, weight etc.). This allows for reduction of the number of items in a receptacle to a level that allows the personnel (or device) at the pack station to effectively choose the item needed at that pack station for fulfillment of an order out of the multiple items in the batch receptacle. This choice can be facilitated by purposely mixing highly different items.

It is also possible to place identical items in each batch receptacle at the unloading station. The items can also belong to the same aisle or area and are then placed in the same batch receptacle at the unloading station. The two or more items may also belong to the same order. The picker may then carry several dirty batch pick containers and is then requested to put picked items in a container specified by the warehouse software or management system. In this way, we can at least pre-sort to the zone although not by aisle. If he e.g. carries three containers, each container is assigned to one of three zones, L(left), C(Centre), R(Right) of the automated storage. At the unloading station, the picker will simply put multiple items from the same common container into a batch receptacle such that a pre-sortation is "automatically" achieved.

Some of the batch receptacles are then routed to and buffered in an automated storage for later retrieval. Some may be directly routed to the pack stations if needed right away.

When all of the individual items stored in the storage facility are available to complete an order, the stored batch receptacles, which may or may not be in the same aisle with the donor totes originally stored in the storage facility, are retrieved and transported to pack stations for specific item retrieval for a certain order assigned to that pack station, where retrieved items are packed with other retrieved items of an order for order fulfillment.

The batch receptacles which still contain item(s) are routed back to storage rack or directly to next pack stations. This process is continued until the batch receptacles are emptied of items. Then the batch receptacles may be returned to the unloading station for reuse.

The storage facility may be an automated storage facility, meaning that it may be partially or fully automated.

The term "receptacles" includes totes, trays, containers, paperboard containers, carton boxes etc. If not denoted otherwise receptacles may be of the
- donor type containing inventory stored and not allocated to any order, in other words items are picked from these receptacles; or
- batch type containing items to be picked for an order/orders and already allocated to an unfulfilled order/orders, from the unloading station or manual pack stations in the manual picking area; or
- order type containing picked items, i.e. containing completed orders or orders in progress.

Some or all batch receptacles may be subdivided into compartments, so that transport and choice of items are facilitated. The compartments may be of equal and/or differing size. Usually such compartments make sense for small items therefore large number of items can be put in single receptacle. The batch receptacles may be subdivided into eight or less compartments. The subdivision may be performed by radially centered walls within the container etc. or by angular walls within the receptacles. Obviously not all receptacles need be subdivided in the same manner and several different kinds of subdivided receptacles can be used as required in parallel or divider arrangement can also be changed dynamically at the induction station.

In accordance with a further aspect of the invention, it has been recognized that when a manual storage and picking area is combined with an automated storage and retrieval racking area as claimed, in other words a hybrid solution is proposed, applications with high fluctuation rates of demand or order fulfillment or existence of very slow movers or limited number of very fast movers can be best served. The manual picking area can be used not only to pick very slow movers and very fast movers in the economical and also efficient fashion, but also to cope with peak periods in demand and can, on the other hand, be switched off when not needed. This allows keeping the storage and retrieval racking area in an optimal utilization range. Also the manual picking area relieves the automated storage and retrieval racking area of some of the storage volume. It is also possible to use the automated storage and retrieval racking area to decouple the order fulfillment process between manual picking and packing.

When the automated storage and retrieval racking area is located downstream of manual picking area it provides a decoupling function of order processing between two areas as well as managing an order release. This means that it provides non-disturbing environment for both areas and matching of timing of order processing which leads to increase in operating efficiency and good control of when, what and how much and in what sequence orders are released to the dispatched area.

The automated storage and retrieval racking area is arranged downstream from the manual picking area and is connected to the manual picking area by a routing conveyor, which also leads to a shipping area. Therefore the routing conveyor connects both picking areas and may serve as a dispatch conveyor of complete orders to a shipping area.

The manual picking area comprises manual pack stations arranged along the extension of the routing conveyor and supplying the routing conveyor with receptacles picked at the manual pack stations. The manual pack stations are also supplied by the routing conveyor with receptacles.

The manual pack stations may be of any kind and operator can pick items from any storage media, e.g. pallet flow rack or static location for very fast movers, flow rack for fast movers, shelves for slow movers, pick walls etc. located nearby the station.

The manual pack stations in the manual picking area may be used to supply donor and/or batch receptacles for replenishment of the automated storage and retrieval racking, which are filled with multiple identical items and are transported and stored in the storage and retrieval racking area. For example the replenishment receptacles may be filled with very fast movers from a flow rack. Those items are often assigned to the order(s) before such an operation takes place so operator can pick and put an exact quantity so as not to leave residual quantity in the storage rack.

The automated storage and retrieval racking area comprises a storage racking comprising a plurality of multilevel storage racks in which order and/or product units are stored, wherein the storage racks are disposed back-to-back in pairs and have an aisle between pairs. In other words the racks have an aisle between them and each rack abuts a rack of a neighboring aisle.

All donor, batch receptacle and order receptacles are fed into the storage racking by at least one storage-entry conveyor and retrieved by at least one storage-exit conveyor. Preferably one storage-entry conveyor and one storage-exit conveyor are provided for each aisle.

Each storage racking aisle is serviced by at least one automatic storage and retrieval device (AS/RS) for storage and retrieval of receptacles from the storage. Preferably each level of each aisle has a dedicated AS/RS machine but also AS/RS devices serving two and more levels are possible.

Receptacles are exchanged directly between two adjoining storage racks from a source storage rack to an adjacent destination storage rack via cross conveyance locations in the storage racks themselves. This allows sorted retrieval from storage in a simpler manner and without sortation outside of the aisles. This reduces technical complexity and space, lowers cost and achieves better reliability.

In accordance with the invention, it has been also recognized that when receptacles are exchanged directly between two adjoining storage racking units from one rack of a storage racking aisle to an adjacent rack of a next storage racking aisle via cross conveyance locations in the storage racking units, distribution and/or complex sorting in the front-zone can be omitted, since the receptacles are already stored in a single storage rack aisle even if initially they were stored elsewhere. When retrieved from storage, they are simply retrieved in sequence. Therefore a direct transfer of receptacles without distribution or sorting outside of the aisles can be achieved without "crossing" conveyors and this with a simpler and smaller technical installation with smaller space and higher reliability. The receptacles can therefore just be retrieved from the respective aisle in the required sequence. This allows for reduction of the so-called front-zone installations. The storage is preferably a fully automated storage.

In other words, storage racking locations of abutting racks are used for passing receptacles from one side of the racking through to the next, so that the transporting units can be transferred from one racking to the next.

So, the automated storage facility comprises a three dimensional warehouse for storage of receptacles with shuttles servicing each aisle and possibly each level, wherein the shuttles themselves have load handling means which allow transfer of receptacles directly between adjoining racks by pushing or pulling the receptacles from a source rack location of a first rack to a destination rack location of an adjoining second rack, and optionally each aisle is connected to a pack station.

Therefore, cross conveyance or sorting is possible inside the racking units themselves and accordingly it is possible to dispense with "cross conveyance" in the front-zone completely.

If necessary, the use of a front zone conveyor for cross conveyance can be combined with this concept especially if the front zone conveyor cannot be omitted for other reasons than cross conveyance, while reducing the complexity and throughput requirements of the front zone conveyor and control system.

In an expedient manner, the cross conveyance locations are provided in each level or any selected level of the storage racking units.

Particularly effective path-time optimization is achieved if the cross conveyance locations are disposed closer to inbound and outbound conveyor line. It is also possible to locate cross conveyance locations at different positions within a level.

The cross conveyance locations can also be used as buffers, especially if they belong to final destination aisle of the receptacles, i.e. the transporting or storage units remain therein, until they are actually needed or retrieved.

The exchange within the cross conveyance locations can be effected actively or passively with regard to the AS/RS, i.e. on the one hand the cross conveyance location can be simply a passive storage surface, on which the AS/RS of one aisle deposits receptacles (places them into storage) and from which the AS/RS of the adjacent aisle receives receptacles (removes them from storage). For each racking storage location or cross conveyance location this procedure can always be performed in one direction only or in both directions.

Preferably the automatic storage and retrieval device itself displaces the receptacles in the cross conveyance locations, i.e. it is most preferred that the AS/RS itself is the active handling means, i.e. the receptacles are handled only by the AR/RS also for exchange in the cross conveyance locations and these do not have any kind of own drive means.

By reason of the simplicity of the cross conveyance locations it is also possible to subsequently retrofit or refit cross conveyance locations and to adapt flexibly to the level of efficiency required in the storage system.

For exchange purposes, the AS/RS can likewise place receptacles in double-depth storage or multiple-depth storage in the cross conveyance location. The AS/RS of one aisle can thus place the receptacles in storage in the cross conveyance locations to such a depth that they are already to be assigned to the adjacent racking and can be reached "normally" by the AS/RS, in other words the automatic storage and retrieval device of a source rack places the receptacles into the cross conveyance location in an adjacent destination rack. In addition, the load receiving means, e.g. telescopic arms, can have an extended range. It is also possible to use a stacked storage of receptacles.

Since the cross conveyance locations are subject to be utilized extensively and to reduce damage of receptacles, it is expedient if the floors of the cross conveyance locations be coated to reduce friction. Also structural reinforcement can be implemented.

It is particularly preferable if the AS/RS are "miniloads" or single-level racking serving units. In particular shuttles or satellite vehicles are preferred. A "miniload" AS/RS is a floor run multilevel storage and retrieval machine with a flexible load handling device that supports a wide range of individual articles, bundled or stacked articles, containers, trays, cartons of different sizes and weights. Also shuttles with a stacked arrangement of two load handling platforms or an elevating platform are to be used in connection with the invention for handling several levels from a single rail.

The shuttle can be used in two arrangements, a so called "captive" or "roaming" arrangement. In the captive arrangement the shuttle stay in their respective level. In the roaming alternative the shuttle change levels as required.

It is thus possible in accordance with the invention to achieve a particularly high level of retrieval efficiency whilst fully maintaining the desired sequence of transporting or storage receptacles in any aisle. This is also achieved with considerably less technical work than in accordance with the Prior Art.

At least one lifting device is used, in order to transfer receptacles to the at least one storage-exit conveyor, i.e. the lift allows for level changes of receptacles coming from the storage-entry conveyor or destined to the storage-exit conveyor. Usually this will be a stationary lift, but also AS/RS with lift functions (e.g. mini-load) could be envisioned.

The at least one lift is optionally of the drive-through-type, meaning that receptacles may pass through the lift within the rack, as if it were a conveyor.

In a preferred embodiment a lift is installed in each rack of an aisle and each lift is either an inbound-lift connected to the storage-entry conveyor or an outbound-lift connected to the storage-exit conveyor or inbound and outbound-lift connected to both storage-entry and storage-exit conveyor.

Possible lifts include in particular vertical conveying means. It is favorable if each lift has one or more, in particular two, locations/positions for receptacles. It is also beneficial if each level of the storage racking has at least one buffer location for decoupling the single-level AS/RS and the lift. This renders it possible to fully utilize the quicker single-level AS/RS and to prevent empty-running of the lift.

It is also advantageous if each lift has a separately driven conveying means for each location. In particular, it is then advantageous if each lift has two locations which are each provided with a separately driven conveying means movable in different directions. Therefore, the transfer of two receptacles for each level can always be effected simultaneously in different directions or onto different outbound buffers, e.g. to the left and right. In addition, the reception of the receptacles onto the lift is preferably controlled so that two receptacles are discharged onto one level. This is possible on account of the high efficiency of the shuttles used, since the transfer locations (buffer location) to the lift are practically always occupied, so that for the control of the lift there is provided a selection option which allows the lift to be occupied accordingly by receptacles for different buffers of one level.

The automated storage and retrieval racking area may also include at least one fully or semiautomatic pack station for picking from donor receptacles into order receptacles for fulfilling orders, to which receptacles are fed by the at least one storage-exit conveyor and from which receptacles are dispatched by the at least one storage-entry conveyor. It is also possible to use several fully or semiautomatic pack stations and especially one for each aisle.

In the present application a fully automated order pack station is defined as a pack station according to the goods-to-person principle with fully automated receptacle handling, i.e. a fully automated supply and discharge and presentation of the receptacles. Empty order receptacles and receptacles with picking goods are automatically supplied to the station. Receptacles are placed in ergonomically optimal height on the pack station. Usually such a station will also incorporate means for directing, instructing and controlling as well as supervising the picker (e.g. pick-to-light etc.), who will still manually pick out of donor receptacles into order receptacles. As an option, the operator may be replaced with an automated picking device/machine to realize a fully automated picking process.

In contrast a semiautomatic pack station will not have the fully automated receptacle handling just described, but will involve manual processing of receptacles.

To fulfill orders a routing conveyor is connected to the at least one inbound storage-entry conveyor and/or the at least one storage-exit conveyor of the storage racking. This allows
- order receptacles containing completed orders coming from the manual picking area to be dispatched via the routing conveyor to the shipping area or inducted into the storage racking of the automated storage and retrieval racking area via the at least one storage-entry conveyor for later dispatch;
- order receptacles containing completed orders coming from the storage racking of the automated storage and retrieval racking area to be dispatched via the routing conveyor to the shipping area;
- order receptacles containing completed orders coming from the fully or semiautomatic pack station of the automated storage and retrieval racking area to be dispatched via the routing conveyor to the shipping area or inducted into the storage racking of the automated storage and retrieval racking area via the at least one storage-entry conveyor for later dispatch;
- order and/or batch receptacles containing partial orders coming from the manual picking area to be introduced into the storage racking of the automated storage and retrieval racking area via the at least one storage-entry conveyor for further processing;
- order and/or batch receptacles containing partial orders coming from the manual picking area to be routed to packing station.
- order and/or batch receptacles containing partial orders coming from the storage racking of the automated storage and retrieval racking area to packing station via the at least one storage-exit conveyor to be introduced.
- order and/or batch receptacles containing partial orders coming from the fully or semiautomatic pack station or the storage racking of the automated storage and retrieval racking area to be introduced into the storage racking of the automated storage and retrieval racking area or routed to next packing station for further processing;
- order receptacles containing multiple complete orders coming from the manual picking area to be routed to packing stations;
- Donor receptacles containing newly received items coming from the receiving area to be introduced into the storage racking of the automated storage and retrieval racking area;
- Donor receptacles containing newly received items coming from the receiving area to be routed to pick station for "replenishment by opportunity";
- Donor receptacles containing newly received items coming from the receiving area to be routed to manual picking area for replenishment;
- Empty donor receptacles coming from the pick station to be sent back to receiving area for replenishment;
- Empty order receptacles coming from the fully or semiautomatic pack station to be sent back to the manual picking area for further processing;

This may allow either immediate or controlled order release depending on the necessities.

The automatic storage and retrieval device (AS/RS) may be fed by an inbound-buffer and may feed into an outbound-buffer, wherein the buffers are arranged within storage racks, and the cross conveyance locations are arranged preferably but not limited to directly behind/next to the inbound-buffer and/or outbound-buffer of a corresponding storage rack.

Further it is possible to form a conveyor loop with the at least one storage-entry conveyor, the at least one lift and the at least one storage-exit conveyor, wherein the at least one lift is fed by the storage-entry conveyor and itself feeds the storage-exit conveyor. Then the outbound-buffer may feed into the conveyor loop and inbound-buffer can be fed by the conveyor loop. The pack station should be incorporated into the loop.

Preferably the routing conveyor has either one or two levels per each picking level and there may be more than one picking level. In a particularly preferred embodiment the lower level routing conveyor supplies partial order and/or donor receptacles from the storage racking of the automated storage and retrieval racking area to the fully or semiautomatic pack station and the upper level routing conveyor returns partial or completed order and/or donor receptacles to the storage racking of the automated storage and retrieval racking area. Then it is possible that the lower level routing conveyor supplies empty receptacles to the fully or semiautomatic pack station. The other way around is also possible, meaning that upper level routing conveyor supplies partial order and/or product units as well as handing empty receptacles and lower level routing conveyor returns partial order /donor receptacles.

A single level conveyor is preferred when there is no need for handling order totes within the system, then donor receptacles can be retrieved one after another in the sorted fashion and no empty order unit must be handled.

The order or donor receptacles can be placed in storage randomly ("chaotically") being distributed over the entire system without knowledge of the subsequent sequence when they are retrieved. In contrast to DE 299 12 230 U1 no restriction as to possible modules or storage areas is required.

The invention is further characterized by a high degree of flexibility, since the inbound and outbound feeding lines can be connected to the corresponding lifts at any points.

In parallel with the outbound lifts, it is likewise possible to provide dedicated inbound lifts with correspondingly supplying distribution feeding lines. On the other hand, it is also possible to control the outbound lifts such that in addition to the outbound operation they can also be used as inbound lifts. In the reverse scenario, optionally present dedicated inbound lifts can also be used as outbound lifts according to requirement. In the event of malfunctions of individual lifts, this also permits uninterrupted operation or an increase in system efficiency. To this end, the inbound or outbound lines must be disposed between the lift and racking at different heights. This requires the presence of two similar combined inbound and outbound levels, the collecting lines of which are brought together after passing the last outbound line in sequence.

The transverse displacement function, i.e. the exchange of receptacles within the cross conveyance locations in the rack by the AS/RS itself, offers the advantage that, in the event of a malfunction of e.g. an outbound lift/inbound lift or feeding lines, the function of the relevant aisle can be maintained.

The automated storage facility may also comprise sequencers, routing conveyors or put-walls.

Further features and details of the invention are apparent from the description hereinafter of the drawing, in which
Figure 1 shows a schematic plan view of a storage facility with a manual storage and picking area and an automated storage and picking area;
Figure 2 shows a typical schematic plan view of exchange of transport units between racks within the racking storage in the automated storage facility of figure 1;
Figure 3 shows a typical schematic plan view of a first and second picking level in a storage facility with a single level routing conveyor;
Figure 4 shows a typical schematic plan view of a picking level in a further storage facility with a two level routing conveyor;
Figure 5 is a schematic view of figure 1 indicating movement of the respective receptacles
Figure 6 shows a schematic plan view of a further storage facility with a manual storage and picking area and an order fulfillment area using put walls; and
Figure 7 shows a schematic plan view of a further embodiment of a storage facility with a manual storage and picking area and an automated storage and picking area consisting of sequencer and/or buffer.

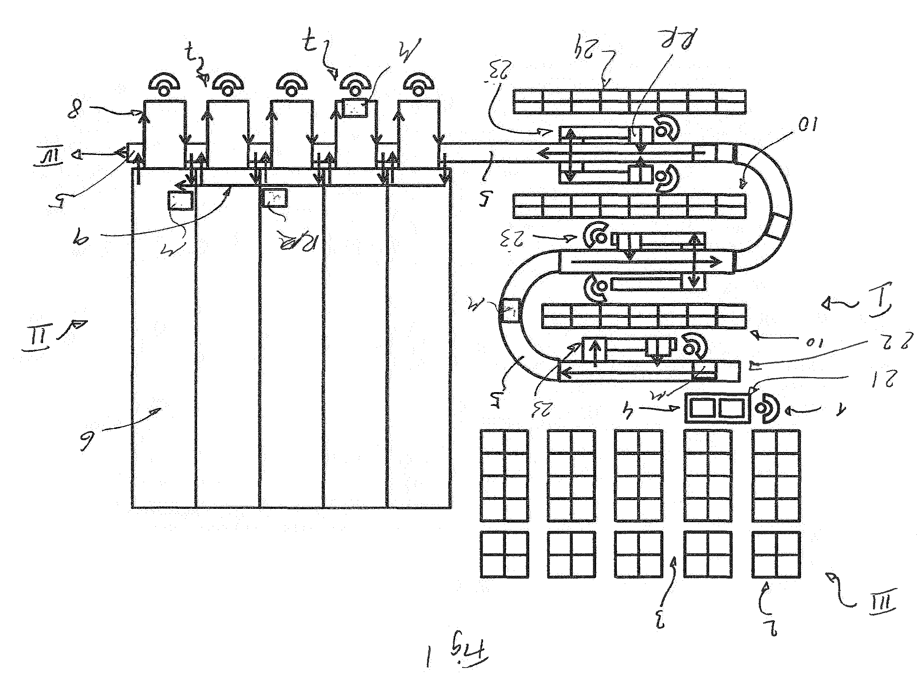

In figure 1 a schematic plan view of a storage facility with a manual storage and picking area I, III and with an automated storage and retrieval racking area II is shown.

The automated storage and retrieval racking area II is arranged downstream from the manual picking area I, III and is connected to the manual picking area I, III by a routing conveyor 5, which eventually leads to a shipping area IV.

Other way round is also possible, the automated storage and retrieval racking area II would then be arranged upstream from the manual picking area I and connected to the manual picking area I by a routing conveyor 5, and the end of the routing conveyor would lead to a shipping area IV.

The manual storage and picking area III is supplied by a manual batch pick process combining several products from several different orders into a common container (dirty batch pick), from which the products are separately placed into product units and placed on the routing conveyor 5. This can be done by either separating each product in a single container etc. or placing multiple products into subdivided containers etc.

The manual batch pick process takes place in a batch pick area III with manually serviced racks or shelves 2 separated by aisles 3 into which a picker 1 takes his picking cart 4 and gathers the articles/products according to orders assigned to him in a common containers 21. If operator 1 is able to carry multiple common containers, or single container with divider(s), he may be instructed by warehouse management system (database) which container and/or which section of the container he should put the picked items into. Items to be sent to the same or close storage and/or pack zone will generally be put to the same container/section so that routing of batch receptacles will be minimized.

The dirty batch pick in the common containers 21 containing items for different orders is then forwarded to an unloading station 22, where the items from the common container 21 are placed into receptacles by placing multiple items into batch receptacles M (so called multiplication in contrast to singulation).

At least two items are placed in a batch receptacle M. Usually eight or less items will be placed in the batch receptacles M depending upon type of item (color, size, weight etc.). This allows for reduction of the number of items in a receptacle M to a level that allows the personnel at the pack station 7 to effectively choose the item needed at that pack station for fulfillment of an order out of the multiple items in the batch receptacle M.

Multiplication is generally done in such a way that it is done from the same tote/section so that the routing of the batch tote will be minimized or under certain circumstances (when the destination of items put in the batch tote happens to be the same) eliminated.

The batch receptacles M are then routed (on conveyor 5) to and stored in an automated storage 6 for later retrieval. Some may be directly routed to the pack stations if needed right away. Therefore the batch receptacles are a kind of donor receptacle (see below).

When all of the individual items stored in the storage facility are available to complete an order, the stored batch receptacles M are retrieved and transported to pack stations for specific item retrieval for a certain order assigned to that pack station, where retrieved items are packed with other retrieved items of an order for order fulfillment, as will be discussed in detail later on.

The batch receptacles M are routed to next destination, typically the storage aisle where the next order is executed via either routing conveyor or cross conveyance locations within rack. This process is continued until the batch receptacles are emptied of items. Then the batch receptacles may be returned to the unloading station for reuse.

The manual storage and picking area I further comprises manual picking stations 23 supplied and arranged along the extension and on one or both sides of the meandering routing conveyor 5 and supplying the routing conveyor 5 with receptacles picked at the manual picking stations 23.

The picking stations 23 are connected to the routing conveyor by conventional conveying technology, like roller or belt conveyors, located close to storage shelves 10 from which certain products may be picked and placed into order receptacles.

The picking stations 23 are either operated separately or by two pickers at the same time.

Alternatively, "pace belt pick" can be used instead of zone picking station 23 with zone routing conveyors. "Pace belt pick" will have a straight routing conveyor with no zone diverting system and the order units will run on this at consistent pace. The picker picks required articles and put them into the order receptacles on the fly within each picking zone. Otherwise, the conveyor stops until product is inducted.

The picking stations 23 may also be used for supply of donor receptacles for replenishment of the automated storage and retrieval racking II, which are filled with multiple identical items and are transported and stored in the storage and retrieval racking area. For example the replenishment receptacles RR may be filled with very fast movers from a flow rack 24.

Many of the below embodiments have similar or like devices, installations etc. which are therefore indicated by same reference numerals.

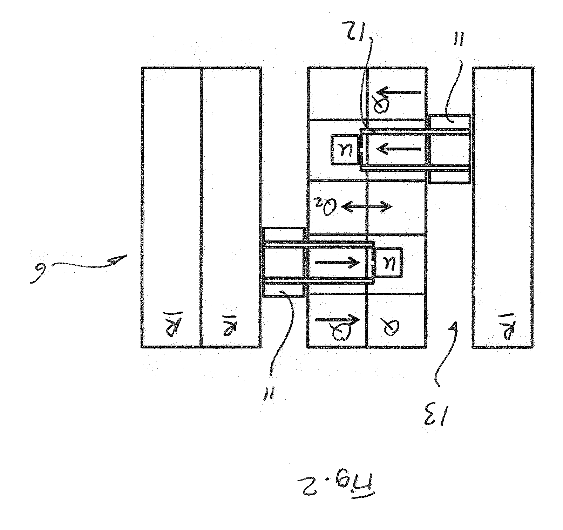

The automated storage and retrieval racking area II comprises a storage racking 6 comprising a plurality of multilevel storage racks R in which order and/or product receptacles, in general designated with U, are stored, wherein the storage racks R are disposed back-to-back in pairs and have an aisle 13 between pairs (see also figure 2).

The aisles 13 are connected to semi or full-automated picking stations 7 through conveyor installations 8, which encompass at least one storage-entry conveyor 14 provided for feeding order and/or product receptacles U into the storage racking 6, R, and at least one storage-exit conveyor 15 provided for retrieval of order and/or product receptacles U from the storage racking 6, R.

So the semi/full automatic pack station 7 for picking from product receptacles D (D for donor) into order receptacles O (O for order) for fulfilling orders are fed by the at least one storage-exit conveyor 15 and order and/or product receptacles are returned to the storage rack by the at least one storage-entry conveyor 14.

The routing conveyor 5 is also connected to the at least one inbound storage-entry conveyor 14 and the at least one storage-exit conveyor 15.

Each storage racking aisle 13 has one automatic storage and retrieval device in the form of a shuttle 11 provided in each level or each few levels for storage and retrieval of order and/or product receptacles in the storage racks R.

Order and/or product receptacles U are exchanged directly between two adjoining storage racks R from a source storage rack to an adjacent destination storage rack via cross conveyance locations Q in the storage racks themselves (see figure 2), which can be one way exchange locations Q or bidirectional.

The shuttle 11 itself displaces the order or product receptacles U in the cross conveyance locations Q actively with its load handling means 12, which are telescopic arms on both sides of a loading platform and are equipped with unit handling levers. There is no active drive means within the racks R themselves.

The shuttle 11 of a source rack places the order or product receptacles U into the cross conveyance location Q in an adjacent destination rack, so that the shuttle operating in the according, neighboring aisle can handle the unit by normal deep operation. In other words, the sourcing shuttle operates deeper than for normal single or double deep storage, e.g. triple deep for exchange.

Therefore it is possible to transfer receptacles U through the storage racking 6 in the sense of arrow 9 without leaving the storage.

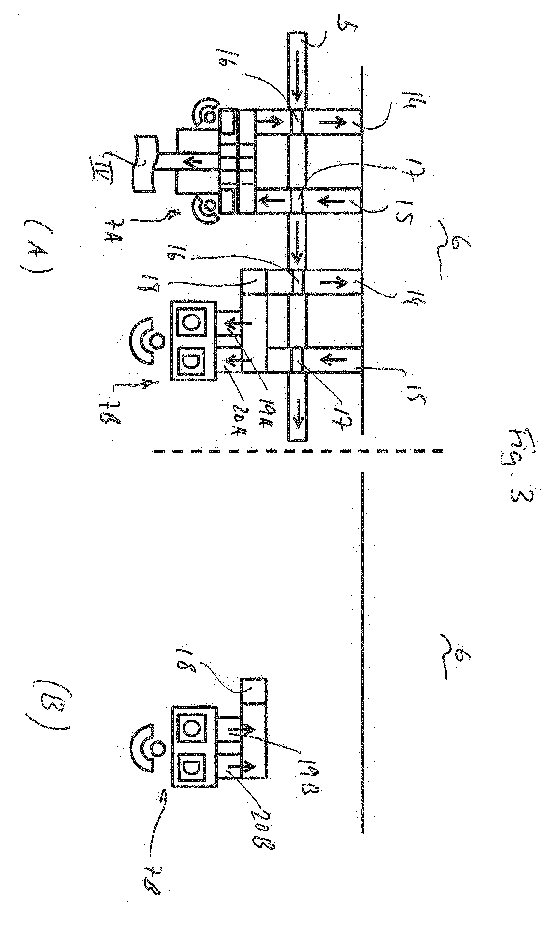

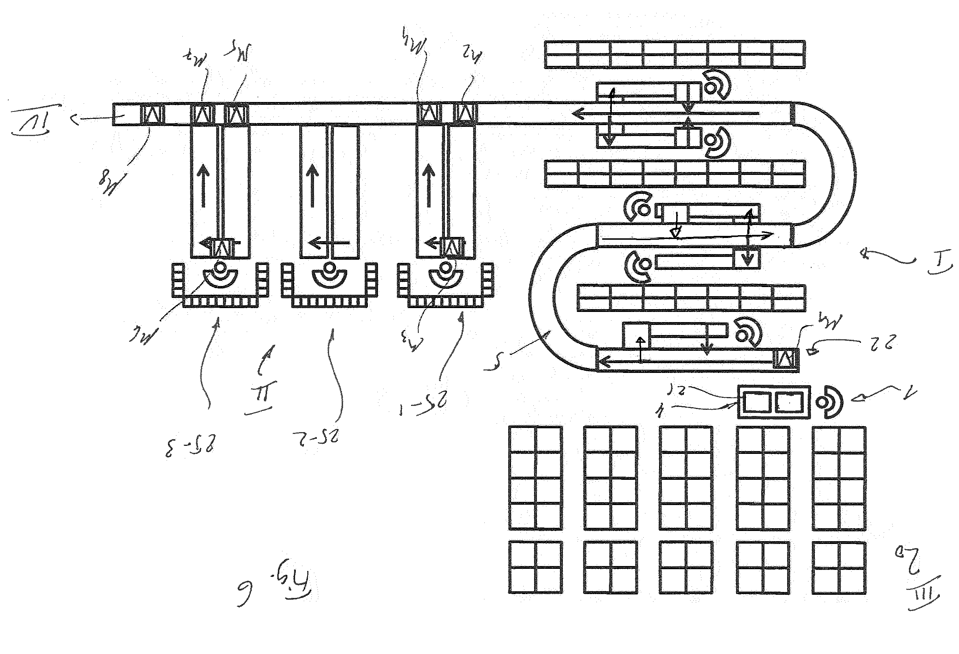

According to figures 3 and 6 the semi/full-automated pack stations 7 may have many different configurations.

In figure 3 the semi-automated pack station 7A (left hand side) is directly connected to an aisle 13 of the storage racking 6 via one storage-entry conveyor 14 and one storage-exit conveyor 15, which in turn are connected/pass through the routing conveyor 5 by right-angle-transfer-devices 16, 17, also called RAT in the art.

The semi-automated pack station 7A incorporates one/two work places for pickers and in between a dispatch conveyor for direct dispatch of complete orders to the shipping area IV. Such a station is ideal for small orders as in e-commerce.

Alternatively or in addition full-automated pack stations 7B may be used, which is arranged in such a way as to receive order receptacles O and product receptacles D in level A via one storage-entry conveyor 14 and one storage-exit conveyor 15, which in turn are connected/pass through the routing conveyor 5 by right-angle-transfer-devices 16, 17, as before, but end in servicing conveyors 19A for order receptacles O and 20A for product or donor receptacles D.

However the dispatch of the order receptacles 0 and product or donor receptacles D is performed by servicing conveyors 19B for order receptacles O and 20B for product or donor receptacles D on a higher level B (right hand side). This is achieved by a level changing conveyor device 18 which routes onto the storage-entry conveyor 14 on level A.

The routing conveyor 5 has only one level in level A and can be used to supply complete orders to the shipping station IV.

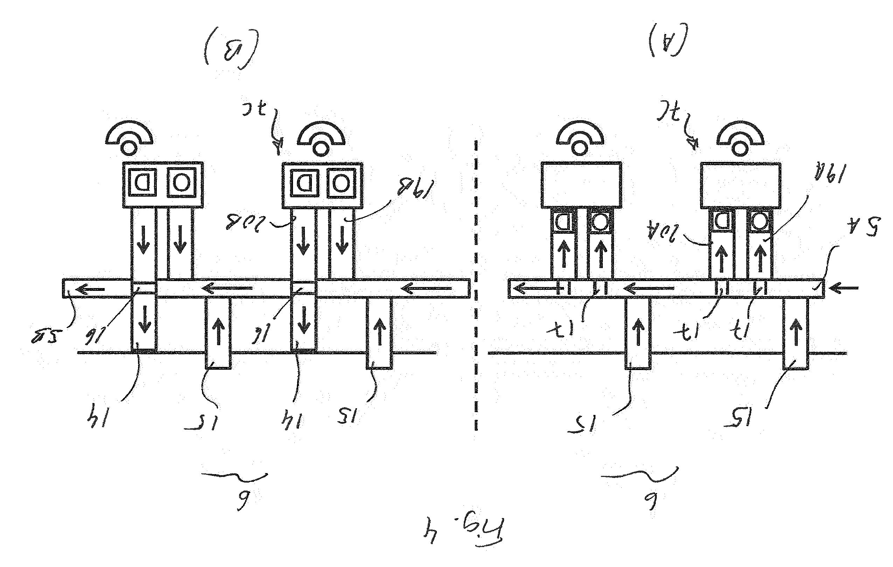

Alternatively, as depicted in figure 4, the routing conveyor 5 may have two levels 5A and 5B, i.e. one conveying level in each level A (left hand side) and B (right hand side).

In level A the picking station 7C is supplied with order receptacles O and product receptacles D similar as above, but the servicing conveyors 19A and 20A are not directly aligned with the storage-exit conveyors 15 but are located downstream on the routing conveyor 5A and reachable by using RAT 17.

Level B is therefore used for dispatch of order receptacles O and product receptacles D from station 7C, by servicing conveyors 19B for order receptacles O and 20B for product or donor receptacles D on a higher level B (right hand side). Servicing conveyor 19B is not aligned with storage-entry conveyor 14 (in analogy to level A) but via RAT 16 downstream. In contrast servicing conveyor 20B is aligned with storage-entry conveyor 14. Therefore order receptacles O from station 7C may pass through RAT 16 and be conveyed downstream on routing conveyor 5, whereas product receptacles D can be directly routed back into storage. Also order receptacles O may be redirected by RAT 16 into storage.

The storage and picking described above therefore allows:
- order receptacles containing completed orders coming from the manual storage and picking area I are dispatched via the routing conveyor 5 to the shipping area IV or introduced into the storage racking 6 of the automated storage and retrieval racking area II via the at least one storage-entry conveyor for later dispatch;
- order receptacles containing completed orders coming from the storage racking 6 of the automated storage and retrieval racking area II are dispatched via the routing conveyor 5 to the shipping area IV;
- order receptacles containing completed orders coming from the semiautomatic pack station 7 of the automated storage and retrieval racking area II are dispatched via the routing conveyor 5 to the shipping area or introduced into the storage racking 6 of the automated storage and retrieval racking area II via the at least one storage-entry conveyor 14 for later dispatch;
- order and/or batch receptacles containing partial orders coming from the manual storage and picking area I are introduced into the storage racking 6 of the automated storage and retrieval racking area II via the at least one storage-entry conveyor 14 for further processing or introduced directly into the semi/full automatic pack station 7 for immediate processing;
- order and/or batch receptacles containing partial orders coming from the semi/full automatic pack station 7 of the automated storage and retrieval racking area II are introduced into the storage racking of the automated storage and retrieved to semi/full automatic pack station 7 for further processing;

At least one lift 21 is used for changing levels of the receptacles, in order to transfer the order and/or product receptacles to the at least one storage-exit conveyor 15 and to receive order and/or product receptacles from the storage-entry conveyor 14. Lift 21 may have more than one location for receptacles, in order to carry more than one receptacle at the same time.

How many lifts 21 are used and how these are arranged depends on the specific implementation.

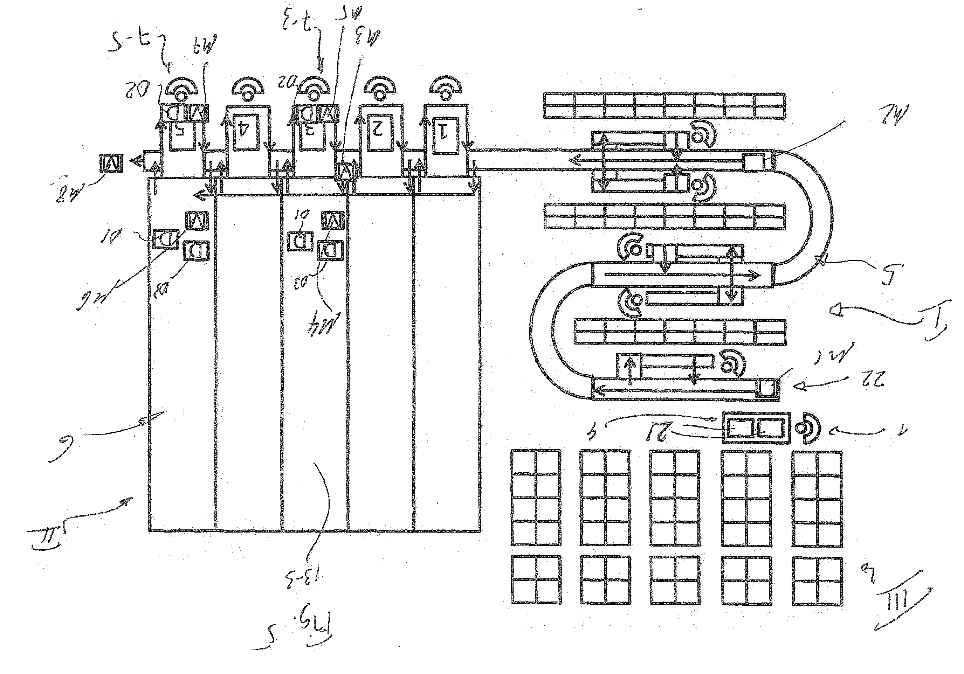

With reference to figure 5 an exemplary workflow in the arrangement according to figure 1 will be explained with batch receptacles M and other donor receptacles D. Their changing positions within the facility will be indicated by adding a number to their reference, e.g.M1, M2, M3, ...; D1, D2, D3, ...etc.

The picker 1 takes his picking cart 4 and gathers the articles/products according to orders assigned to him in common containers 21. The dirty batch pick in the common containers 21 containing items for different orders is then unloaded at unloading station 22. Two or more items from the common containers 21 are placed into batch receptacles M1 (start).

These are then transported on routing conveyor 5 into the storage racking 6, as described above, where they are buffered until needed, i.e. all items for a certain order are available within an aisle.

In the present example the batch receptacle M is stored into aisle no. 3 (see reference M4), as it will be need at the corresponding pack station first.

In this aisle 13-3 also donor receptacle D is stored, as its contents will be need at the same pack station 7 for the same order also.

Donor receptacle D is retrieved and transported to the pack station 7-3 (see reference D2), picked and then stored back into aisle 13-3 (see reference D3).

Then the batch receptacle M is retrieved and transported to the pack station 7-3 (see reference M5) and the item for the order being processed at pack station 17-3 is picked. The corresponding order receptacle is not shown.

Afterwards the batch receptacle M containing the last of the two original items is transported to aisle 13-5 (see reference M6), where its contents will be need next, either via cross conveyance locations Q or routing conveyor.

The processing sequence of those are usually not important except for the case specified by business rule (e.g. heavy goods should be picked before light goods for easy packing) or solution is to handle order receptacles.

The same procedure is then followed at pack station 7-5, see references D1, D2, D3 and M6, M7.

Afterwards the batch receptacle M is depleted, i.e. empty and is dispatched via conveyor 5 and further conveying means back to unloading station 22 for further use.

In a similar manner the batch receptacles M are transported from the unloading station 22 to put walls 25 by conveyor 5 in the embodiment of figure 6.

The batch receptacle M is first conveyed to put wall 25-1, where a first item is needed to fill a compartment of the put wall 25-1 corresponding to an order (see reference M2, M3).

Then the batch receptacle M is conveyed on to a third put wall 25-3 for picking of the second item (see reference M5, M6).

Afterwards the batch receptacle is empty and can be conveyed away (see reference M8), e.g. back to unloading station 22 for further use.

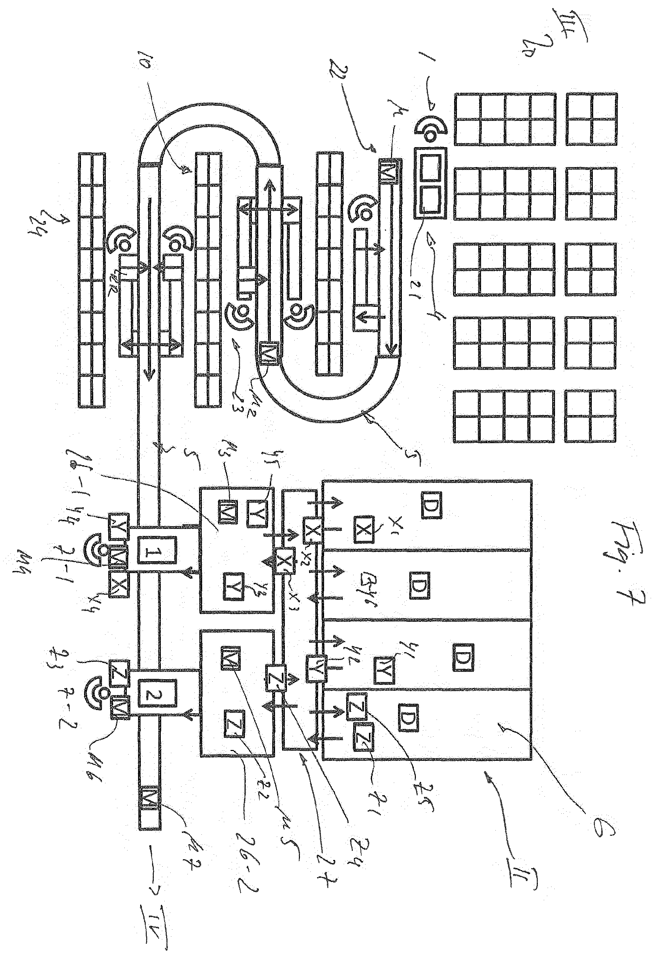

In a similar manner as in figure 5 the batch receptacles M are transported from the unloading station 22 to sequencers 26 by conveyor 5 in the embodiment of figure 7.

The two sequencers 26-1, 26-2 are connected to pack stations 7-1 and 7-2 respectively on one side and via a loop 27 to an automated storage 6, as described above.

First the batch receptacle M from the unloading station 22 is transported via conveyor 5 into the sequencer 26-1 (see reference M1, M2 and M3).

At the same time/ in parallel donor receptacle Y is retrieved from storage 6, as described above with reference to figures 1-4, and transported via loop 26 to sequencer 26-1. (see reference Y1, Y2, Y3)

In the sequencer 26-1 the donor receptacle Y is sorted to be sent to the pack station 7-1 first, where it is picked and then transported back to the sequencer and via loop 27 to storage 6 (see reference Y4, Y5, Y6).

Afterwards the similar procedure is performed with batch receptacle M until all the order assigned to pack station 7-1 requiring batch receptacle M are fulfilled, after which it is transported on to sequencer 26-2 for further picking (see references M4 and M5).

At the same time parallel donor receptacle X is retrieved from storage 6, as described above with reference to figures 1-4, and transported via loop 26 to sequencer 26-1 and on to pack station 7-1 for picking (see references X1, X2, X3 and X4).

In the second sequencer 26-2 donor receptacle Z has been made available as described before for donor receptacles X and Y, in which it is sorted to first output and sent to pack station 7-2 for picking (see references Z1, Z2 and Z3).

Afterwards it is then transported back to the sequencer and via loop 27 to storage 6 (see reference Z4 and Z5).

While donor receptacle Z is being transported away batch receptacle M is transported to pack station 7-2 from the sequencer 26-2 and the last item is picked (see reference M6). Then it is empty and can be conveyed away (see reference M7).

## Claims

1. Method of fulfilling orders comprising:
- manually picking items batch-wise by combining several items from several different orders into a common container from inventory according to orders for the items;
- forwarding the common container to an unloading station, wherein the items are placed into receptacles by placing multiple items into batch receptacles;
- routing at least some of the batch receptacles to a pack stations and storage facility and storing the batch receptacles;
- when all of the individual items stored in the automated storage facility are available to complete an order, retrieving and transporting the stored batch receptacles to pack stations for specific item retrieval;
- packing retrieved items with other retrieved items of an order at a pack station; and
routing the batch receptacles to further pack stations.

2. Method as claimed in claim 1, wherein a common container with and/or without divider or more than one common container is used and items to be sent to the same or close storage and/or pack zone will be put into the same container or section.

3. Method as claimed in claim 1 or 2, wherein two or more items are placed in each batch receptacle at the unloading station.

4. Method as claimed in claim 1 or 2 or 3, wherein two or more identical items are placed in each batch receptacle at the unloading station.

5. Method as claimed in any of the proceeding claims, wherein two or more items belonging to the same aisle or area are placed in the same batch receptacle at the unloading station.

6. Method as claimed in any of the proceeding claims, wherein two or more items belonging to the same order are placed in each batch receptacle at the unloading station.

7. Method as claimed in any one of the preceding claims, wherein the batch receptacles are subdivided into compartments of equal and/or differing size.

8. Method as claimed in any one of the preceding claims, wherein the manually picking items batch-wise step takes place in a storage area with manually serviced racks separated by aisles.

9. Method as claimed in any one of the preceding claims, wherein the storage facility is an automated storage facility.

10. Method as claimed in any one of the preceding claims, wherein the storage facility comprises a three dimensional warehouse for storage of receptacles with shuttles servicing each aisle and possibly each level, wherein the shuttles themselves have load handling means which allow transfer of receptacles directly between adjoining racks by pushing or pulling the receptacles from a source rack location of a first rack to a destination rack location of an adjoining second rack.

11. Method as claimed in claim 10, wherein each aisle is connected to a pack station.

12. Method as claimed in any one of the preceding claims, wherein the storage facility comprises a sequencer, a routing conveyor, buffer, put-walls and/or fully or semi-automated pack stations.
